# EUROPÄISCHE PATENTSCHRIFT

(11) **EP 1 853 975 B1**
(45) Veröffentlichungstag und Bekanntmachung des Hinweises auf die Patenterteilung: **02.06.2010**
(21) Anmeldenummer: 06701802.8
(22) Anmeldetag: 31.01.2006
(51) Int. Cl.: G03G 15/00, G01N 21/15

(54) **RAUMTEMPERIERUNGSANLAGE SOWIE THERMOSTATVENTIL HIERF]R**
ROOM TEMPERATURE TEMPERING INSTALLATION AND THERMOSTAT VALVE FOR THAT INSTALLATION
INSTALLATION DE CLIMATISATION ET VALVE DE THERMOSTAT ASSOCIEE

(30) Priorität: 08.02.2005 DE 102005005844
(43) Veröffentlichungstag der Anmeldung: 14.11.2007
(73) Patentinhaber: Schuck, Ralf, 70771 Leinfelden-Echterdingen (DE); Hertneck, Michael, 70771 Leinfelden-Echterdingen (DE)
(72) Erfinder: SCHUSTER, Joachim, 71229 Leonberg-Gebersheim (DE)
(74) Vertreter: BRP Renaud & Partner
(86) Internationale Anmeldenummer: PCT/EP2006/000787
(87) Internationale Veröffentlichungsnummer: WO 2006/084599

(56) Entgegenhaltungen:
- DE-A1- 10 007 929
- DE-A1- 19 920 864
- DE-C1- 4 318 816
- US-A- 4 139 150

## Beschreibung

Die Erfindung betrifft eine Raumtemperierungsanlage mit einem im Bereich einer raumbegrenzenden Wärmeübergangsfläche, insbesondere einer Fußboden-, einer Decken- oder einer Wandfläche verlegten Rohrleistungssystem für flüssige Wärmeträger, insbesondere Wasser, mit mindestens einem in einem Rohrzweig des Rohrleitungssystems angeordneten Thermostatventil, das einen in einer Steuerpartie des Rohrzweigs angeordneten Ventilsitz sowie einen entgegen der Kraft einer Stellfeder mit einem Dehnstoff beaufschlagten Ventilstößel aufweist, und mit einer auf die Stellfeder unter Verstellung der Raum-Solltemperatur einwirkenden, zwischen einem unteren und einem oberen Begrenzungsanschlag verstellbaren Stellungsanzeige, die eine im Heizbetrieb der Raum-Solltemperatur zwischen einer Mindesttemperatur und einer Höchsttemperatur entsprechende Werteskala aufweist, wobei das Rohrleitungssystem beim Heizbetrieb mit dem eine Vorlauftemperatur oberhalb der eingestellten Raum-Solltemperatur aufweisenden Wärmeträger beaufschlagt wird.

Es ist bereits vorgeschlagen worden, Fußboden-, Decken- und Wandheizungen der eingangs angegebenen Art sowohl für Heiz- als auch für Kühlzwecke einzusetzen. Zu Kühlzwecken muss die Fläche mit Kühlwasser betrieben werden. Dabei ist zu berücksichtigen, dass je nach Kühlwassertemperatur und Temperatur der Luft, die das Rohrleitungssystem umgibt, ab einer bestimmten relativen Luftfeuchtigkeit an der Rohroberfläche eine Kondensation von Wasser auftritt. Dementsprechend ist die Kühlleistung der Flächenheizung begrenzt. Die Kühlleistung der Flächenheizung im Kühlbetrieb liegt bei etwa 35 W/m². Dabei ist zu berücksichtigen, dass im Kühlbetrieb der Wärmeübergang geringer ist als im Heizbetrieb. Mit höheren Raumtemperaturen nimmt auch die Kühlleistung zu. In der Regel wird man zum Zwecke der Kühlung die Wärmequelle des Kreislaufs abkoppeln und die Temperatur des Kreislaufwassers über ein Kühlaggregat absenken. Für die Raumtemperatursteuerung wurde bereits vorgeschlagen (Udo Radtke: Flächenheizung, Flächenkühlung, Heizungs-Journal-Verlag 2005, S. 236), in jedem Raum zwei Raumthermostate oder einen Doppelthermostat zu installieren. Solche Thermostate werden zum Beispiel durch DE 100 07 929 A1 und DE 199 20 864 A1 offenbart. Dabei übernimmt ein Raumthermostat die Regelung des Heizbetriebs durch Öffnung von thermoelektrischen Stellantrieben, während der zweite Thermostat gegenüber dem ersten auf einem um 1 bis 2 K höheren Wert eingestellt wird. Gedacht ist dort auch an einen Raumthermostat mit einer zweiten Schalteinheit, die grundsätzlich gegenüber dem eingestellten Sollwert der Raumtemperatur 1 bis 2 K höher schaltet. Bei Überschreitung der eingestellten Raumtemperatur würde der Heizbetrieb durch Schließen der thermoelektrischen Stellantriebe unterbrochen. Erst wenn durch Fremdwärme oder Sonneneinstrahlung die Raumtemperatur um 1 bis 2 K ansteigt, würde über diesen Schaltbefehl der Kühlbetrieb eingeleitet. In der Regel wird man den Kühlprozess, da er regelmäßig außerhalb der Heizperiode erforderlich ist, von Hand einleiten. Das Auftreten von Kondensat lässt sich mittels spezieller Fühler am Rohrleitungssystem überwachen und die Kühlwassertemperatur damit regeln.

Ausgehend hiervon liegt der Erfindung die Aufgabe zugrunde, die bekannte Raumtemperierungsanlage der eingangs angegebenen Art dahingehend zu verbessern, dass trotz der Verwendung eines relativ einfach aufgebauten Thermostatventils ein auch im Falle einer Fehlschaltung sicherer Heiz- und Kühlbetrieb gewährleistet ist.

Zur Lösung dieser Aufgabe werden die in den Ansprüchen 1 und 16 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung wird vor allem darin gesehen, dass das Rohrleitungssystem bei einem wahlweise einstellbaren Kühlbetrieb mit dem eine Vorlauftemperatur unterhalb einer Raumtemperatur aufweisenden Wärmeträger beaufschlagt wird und dass die Stellungsanzeige eine in der Werteskala obere Einstellposition für den Kühlbetrieb umfasst, die zugleich eine obere Grenztemperatur des Thermostatventils für den Heiz- und Kühlbetrieb definiert. Üblicherweise sorgt die über die Stellungsanzeige des Thermostatventils einstellbare Höchsttemperatur dafür, dass die Raumtemperatur eine vorgegebene Grenztemperatur nicht überschreitet. Bei den üblichen Thermostatventilen liegt diese Temperatur bei etwa 28 °C. Erreicht die Raumtemperatur diesen Wert, so schließt das Thermostatventil, um eine Überhitzung des Raums zu vermeiden. An heißen Sommertagen kann die obere Grenztemperatur üblicher Thermostatventile von der sich einstellenden Umgebungstemperatur gegebenenfalls erheblich überschritten werden. In einem solchen Fall würde das für den Heizbetrieb bestimmte Thermostatventil auch bei Einstellung der Höchsttemperatur in einem Schließzustand verharren. Um dennoch auch mit einem für den Heizbetrieb bestimmten Thermostatventil auf Kühlbetrieb mit dem eine Vorlauftemperatur unterhalb der Raumtemperatur aufweisenden Wärmeträger umschalten zu können, sorgt die Erfindung dafür, dass die Stellungsanzeige eine in der Werteskala obere Einstellposition für den Kühlbetrieb umfasst, die zugleich eine gegenüber der Höchsttemperatur erhöhte Grenztemperatur des Thermostatventils definiert. Die erhöhte Grenztemperatur ist so gewählt, dass das Thermostatventil auch bei sehr hohen vorkommenden Umgebungstemperaturen durchsteuert und dennoch bei einer Fehleinstellung im Heizbetrieb eine Sicherheitsabschaltung herbeiführt und dadurch eine übermäßige Überhitzung vermeidet.

Vorteilhafterweise bildet die obere Einstellposition für den Kühlbetrieb den oberen Begrenzungsanschlag des Thermostatventils. Sie ist in der Werteskala oberhalb der Einstellposition für die Höchsttemperatur im Heizbetrieb angeordnet. Die entsprechende Grenztemperatur liegt um mindestens 3 K, vorzugsweise um mindestens 7 K, oberhalb der der Höchsttemperatur im Heizbetrieb entsprechenden Raum-Solltemperatur. Vorteilhafterweise wird die der oberen Einstellposition entsprechende Grenztemperatur bei 32 °C bis 37 °C gewählt. Die Stellungsanzeige des Thermostatventils ist dabei zweckmäßig als Drehstellungsanzeige ausgebildet.

Die Vorlauftemperatur des Wärmeträgers wird in Abhängigkeit vom Taupunkt auf der Oberfläche des Rohrleitungssystems gesteuert. Dieser ist von der relativen Luftfeuchtigkeit im Raum abhängig. Aus diesem Grund wird die Vorlauftemperatur im Kühlbetrieb üblicherweise 15 °C bis 20 °C betragen. Wenn mehrere Räume mit voneinander stark abweichenden relativen Luftfeuchtigkeiten gekühlt werden sollen, muss die Führung der Vorlauftemperatur von dem Raum aus gesteuert werden, der die höchste relative Luftfeuchtigkeit aufweist.

Eine bevorzugte Ausgestaltung der Erfindung sieht vor, dass der Wärmeträger im Kühlbetrieb durch einen thermisch mit einer Wärmeübertragungsfläche einer Wärmepumpe oder einer Kältemaschine gekoppelten Wärmeaustauscher geleitet wird.

Wenn die erfindungsgemäße Raumtemperierungsanlage für abgeschlossene, aus mehreren Einzelräumen bestehende Wohneinheiten eingesetzt wird, die jeweils mindestens eine in den Fußboden oder die Decke der Einzelräume eingebettete Rohrgruppe aufweisen, die über je eine Vor- und Rücklaufleitung mit einer Rohrverteilung verbunden ist und über eines der Thermostatventile einzeln oder gruppenweise nach Maßgabe der Abweichung einer Raum-Isttemperatur von der eingestellten Raum-Solltemperatur mit dem Wärmeträger beaufschlagbar oder absperrbar sind, wird gemäß der Erfindung vorgeschlagen, dass die Rohrgruppen eines jeden Einzelraums mit ihren vorlauf- und rücklaufseitigen Enden an je eine gemeinsame, nach Art einer Ringleitung innerhalb des Fußbodens oder der Decke durch die Einzelräume hindurchgeführte oder an diesen vorbeigeführte Vor- und Rücklaufleitung in Parallelschaltung angeschlossen sind. In diesem Fall hat es sich als besonders vorteilhaft erwiesen, denn die zu den einzelnen Rohrgruppen gehörenden Vorlaufleitungsteile und Rücklaufleitungsteile in der Summe etwa gleich lang sind, wobei die Vorlaufleitungsteile einzeln und in ihrer Gesamtheit wesentlich kürzer als die Rücklaufleitungsteile sind. Dies ist deshalb von Bedeutung, weil die zur Verfügung stehende Temperaturdifferenz beim Kühlvorgang relativ klein ist. Dadurch wird erreicht, dass sich der Wärmeträger nicht bereits in die Vorlaufleitungsteile durch Wärmeaufnahme so weit aufheizt, dass in dem zu kühlenden-Raum dann keine ausreichende Kühlleistung mehr zur Verfügung gestellt werden kann.

Eine vorteilhafte Ausgestaltung der Erfindung sieht vor, dass die Steuerpartie des einer jeden Rohrgruppe zugeordneten Rohrzweigs einen außerhalb des Fußbodens oder der Decke angeordneten, das Thermostatventil enthaltenden Leitungsabschnitt aufweist. Der Leitungsabschnitt kann dabei in einer teilweise in den Fußboden oder in die Decke eintauchenden Unterputzdose angeordnet sein, wobei das Thermostatventil im Abstand vom Fußboden oder der Decke über eine freie Außenfläche einer Unterputzdose überstehend angeordnet ist.

Ein weiterer Aspekt der Erfindung besteht in der Entwicklung eines neuen Thermostatventils für Flächenheizungen mit einem in einer Rohrpartie angeordneten Ventilsitz, einem entgegen der Kraft einer Stellfeder mit einem Dehnstoff beaufschlagbaren Ventilstößel und einer auf die Stellfeder einwirkenden, zwischen einem unteren und einem oberen Begrenzungsanschlag verstellbaren Stellungsanzeige, die eine einer Raum-Solltemperatur zwischen einer Mindesttemperatur und einer Höchsttemperatur entsprechende Werteskala aufweist, wobei die Stellungsanzeige eine in der Werteskala obere Einstellposition für den Kühlbetrieb umfasst, die zugleich eine gegenüber der Höchsttemperatur erhöhte Grenztemperatur definiert. Eine bevorzugte Ausgestaltung der Erfindung sieht vor, dass die Einstellposition für die Höchsttemperatur im Heizbetrieb eine Rast- oder Anschlagstellung bildet, die beim Verstellen auf die obere Einstellposition im Kühlbetrieb zu überwinden ist.

Vorteilhafterweise bildet die obere Einstellposition der Stellungsanzeige den Endanschlag. Die der oberen Einstellposition entsprechende Grenztemperatur liegt zweckmäßig um mindestens 3 K, vorzugsweise um mindestens 7 K, oberhalb der Position für die höchste Raum-Solltemperatur, beispielsweise bei 32 °C bis 37 °C.

Im Folgenden wird die Erfindung anhand eines in der Zeichnung in schematischer Weise dargestellten Ausführungsbeispiels näher erläutert. Es zeigen
- Fig. 1: einen Verlegeplan einer kombinierten Fußbodenheizung und -küh- lung in einer Wohneinheit mit vier Räumen;
- Fig. 2: eine vergrößerte Darstellung des Thermostatventils mit einer Drehstellungsanzeige;
- Fig. 3: eine Abwicklung der Werteskala der Drehstellungsanzeige nach Fig. 2.

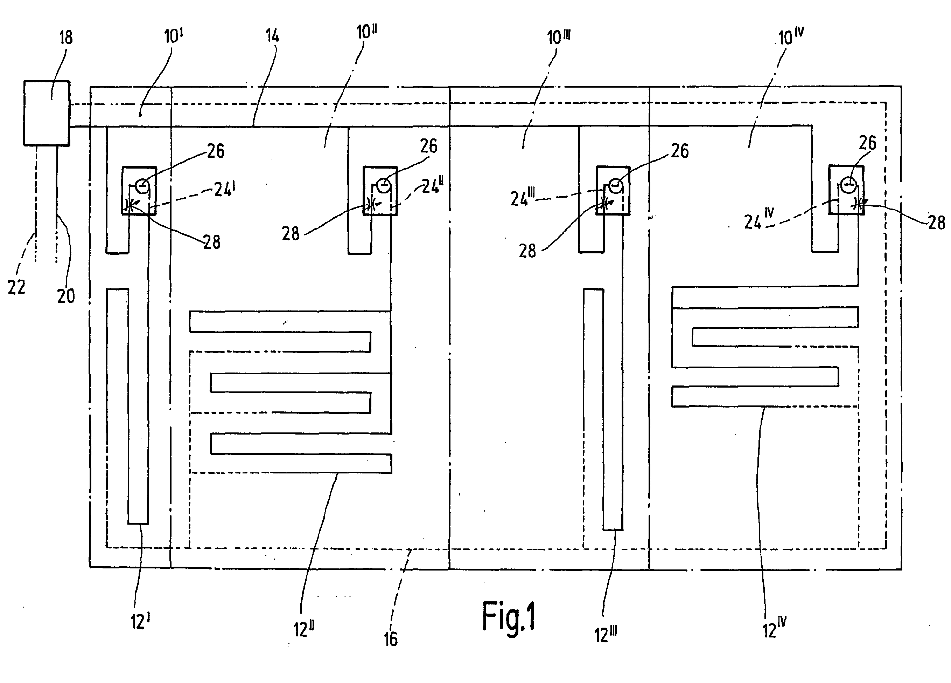

Der in Fig. 1 dargestellte Rohr-Verlegeplan ist für die Fußboden-Heizung und -Kühlung einer Wohneinheit mit vier Einzelräumen 10', 10", 10"', 10^{IV} bestimmt, die unabhängig voneinander temperaturgeregelt werden können. In jedem Einzelraum ist eine Rohrgruppe 12', 12", 12"', 12^{IV} verlegt, die in den dortigen Fußboden-Estrich eingebettet ist. Die Rohrgruppen 12', 12", 12"', 12^{IV} sind an je eine gemeinsame Vorlaufleitung 14 und Rücklaufleitung 16 in Parallelschaltung angeschlossen. Die Vorlaufleitung und die Rücklaufleitung sind nach Art einer Ringleitung durch die Einzelräume hindurch innerhalb des Fußbodenestrichs verlegt. Sie münden in einen gemeinsamen Rohrleitungsverteiler 18 und sind dort an einem zum Heizkessel führenden Heizkesselvorlauf 20 und -rücklauf 22 angeschlossen.

Jede Heizrohrgruppe weist an ihrem vorlaufseitigen Ende einen über die Fußbodenoberkante überstehenden Leitungsabschnitt 24', 24", 24"', 24^{IV} auf, in welchem im Abstand über der Fußbodenoberkante jeweils ein von Hand einstellbares Thermostatventil 26 und eine Verstelldrossel 28 angeordnet ist. Die Thermostatventile dienen zur Raumtemperaturregelung, während die vorzugsweise als Kugelhahn ausgebildeten Verstelldrosseln 28 für den hydraulischen Abgleich bestimmt sind.

Die in Fig. 1 gezeigte Verlegungsart hat den Vorteil, dass nur eine gemeinsame Vorlaufleitung 14 und eine gemeinsame Rücklaufleitung 16 vorgesehen ist, an die die Heizrohrgruppen 12', 12", 12"', 12^{IV} in Parallelschaltung angeschlossen sind. Die mit den verschiedenen Heizrohrgruppen verbundenen Vorlaufleitungsteile und Rücklaufleitungsteile weisen in der Summe die gleiche Länge auf, wobei die Vorlaufleitungsteile in ihrer Gesamtheit erheblich kürzer sind als die Rücklaufleitungsteile. Dadurch wird der hydraulische Abgleich der einzelnen Rohrgruppen erheblich vereinfacht. Bei größeren Räumen 10", 10^{IV} kann die Rohrgruppe 12", 12^{IV} auch aus mehreren Rohrsträngen bestehen, die in Parallelschaltung gemeinsam an den jeweiligen Raumthermostat 26 und an die gemeinsame Rücklaufleitung 16 angeschlossen sind.

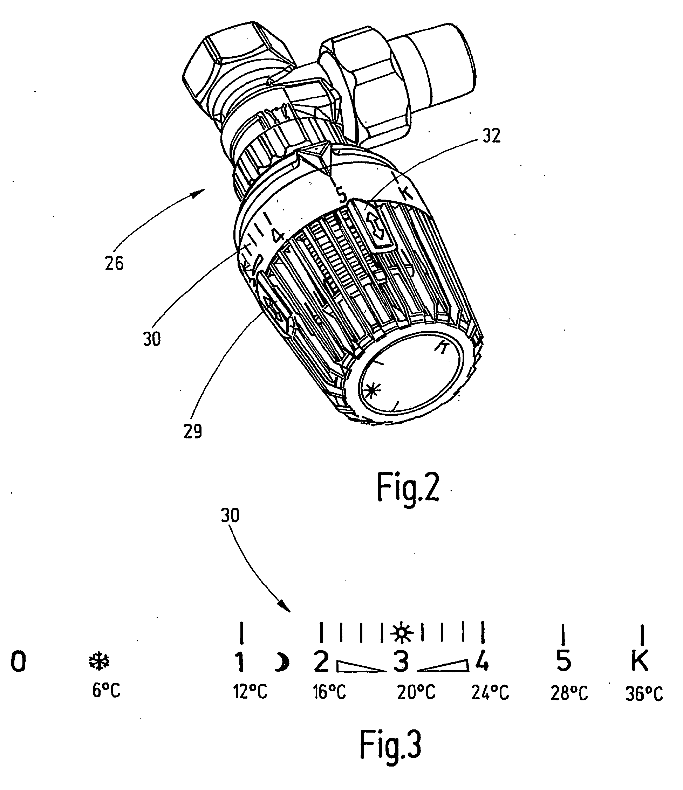

Die Thermostatventile 26 weisen üblicherweise einen innerhalb des zugehörigen Leitungsabschnitts 24', 24", 24"', 24^{IV} angeordneten Ventilsitz sowie einen entgegen der Kraft einer Stellfeder mit einem Dehnstoff beaufschlagten Ventilstößel auf. Weiter ist eine auf die Stellfeder unter Verstellung der Raum-Solltemperatur einwirkende, zwischen einem unteren und einem oberen Begrenzungsanschlag (0 und K) verstellbare Drehstellungsanzeige 28 vorgesehen, die eine Werteskala 30 für die einzustellende Raum-Solltemperatur aufweist. Die Werteskala 30 umfasst bei dem gezeigten Ausführungsbeispiel fünf Positionen 1, 2, 3, 4, und 5, denen gemäß Fig. 3 bestimmte Raumtemperaturen (12 °C bis 28 °C) zugeordnet sind. Weiter enthält die Werteskala einige Symbole, die Standardeinstellungen für Frostfreistellung (Schneekristall), Nachtabsenkung (Mond) und optimale Zimmertemperatur (Sonne) bedeuten. Eine Besonderheit der Drehstellungsanzeige bildet die in der Werteskala obere Einstellposition K, die für den Kühlbetrieb bestimmt ist und zugleich eine gegenüber der Höchsttemperatur (28 °C) in der Position 5 erhöhte Grenztemperatur (36 °C) des Thermostatventils definiert. Beim Kühlbetrieb wird das Rohrleitungssystem mit Kühlwasser beaufschlagt, das eine Vorlauftemperatur unterhalb der Raumtemperatur aufweist. In der Position K öffnet das Thermostatventil bei Temperaturen unterhalb 36 °C und sorgt so dafür, dass das Thermostatventil auch bei hohen Umgebungstemperaturen für den Durchtritt des Kühlwassers zu den einzelnen Rohrgruppen offen bleibt. Andererseits wird auch in der Position K der Drehstellungsanzeige sichergestellt, dass im Falle einer Fehlbedienung, bei der diese Position versehentlich im Heizbetrieb eingestellt wird, die Raumtemperatur nach oben hin auf einem zwar hohen, aber immer noch erträglichen Maß begrenzt bleibt. Die eigentliche Temperatursteuerung wird im Kühlbetrieb über die Einstellung der Vorlauftemperatur des Kühlwassers vorgenommen, wodurch sichergestellt werden muss, dass es entlang dem Rohrleitungssystem zu keiner Taupunktunterschreitung kommt. Eine exakte Raumtemperaturregelung wie im Heizbetrieb ist beim Kühlbetrieb im Übrigen nicht erforderlich. Ein weiteres Sicherungsmittel bildet ein Anschlagschieber 32 im Bereich der Position 5, der von Hand in eine Anschlagstellung verschoben werden kann, so dass die Gefahr von Fehlbedienungen reduziert wird.

Zusammenfassend ist folgendes festzuhalten: Die Erfindung betrifft eine Raumtemperierungsanlage mit einem im Bereich einer raumbegrenzenden Wärmeübergangsfläche, insbesondere einer Fußboden-, einer Decken- oder einer Wandfläche verlegten Rohrleitungssystem für flüssige Wärmeträger, insbesondere Wasser. Die Raumtemperierungsanlage ist sowohl für Heizzwecke als auch für Kühlzwecke bestimmt. Sie umfasst mindestens ein in einem Rohrzweig des Rohrleitungssystems angeordnetes Thermostatventil 26, das einen in einer Steuerpartie des Rohrzweigs angeordneten Ventilsitz sowie einen entgegen der Kraft einer Stellfeder mit einem Dehnstoff beaufschlagten Ventilstößel aufweist. Weiter enthält das Thermostatventil 26 eine auf die Stellfeder unter Verstellung der Raum-Solltemperatur einwirkende, zwischen einem unteren und einem oberen Begrenzungsanschlag verstellbare Stellungsanzeige 28, die eine im Heizbetrieb der Raum-Solltemperatur zwischen einer Mindesttemperatur und einer Höchsttemperatur entsprechende Werteskala 30 aufweist. Beim Heizbetrieb ist das Rohrleitungssystem mit dem eine Vorlauftemperatur oberhalb einer Raum-Solltemperatur aufweisenden Wärmeträger beaufschlagt. Erfindungsgemäß kann das Rohrleitungssystem bei einem wahlweise einstellbaren Kühlbetrieb außerdem mit dem eine Vorlauftemperatur unterhalb einer Raumtemperatur aufweisenden Wärmeträger beaufschlagt werden. In diesem Falle umfasst die Stellungsanzeige 28 eine in der Werteskala 30 obere Einstellposition K für den Kühlbetrieb, die zugleich eine gegenüber der Höchsttemperatur erhöhte Grenztemperatur (36 °C) des Thermostatventils 26 für den Heiz- und Kühlbetrieb definiert. Mit diesen Maßnahmen wird erreicht, dass das Thermostatventil 26 durch den Umbau auf den Kühlbetrieb keine konstruktive Änderung erfordert. Es bedarf lediglich einer Erweiterung der Werteskala 30 und damit des Temperaturbereichs nach oben hin über die bisher durch einen Anschlag definierte Höchsttemperatur (Pos. 5) hinaus.

## Patentansprüche

1. Thermostatventil für Flächenheizungen mit einem in einer Rohrpartie angeordneten, über die Rohrpartie mit einem Wärmeträger beaufschlagten Ventilsitz, einem entgegen der Kraft einer Stellfeder mit einem Dehnstoff beaufschlagten Ventilstößel und einer mit der Stellfeder in Wirkverbindung stehenden, zwischen einem unteren und einem oberen Begrenzungsanschlag verstellbaren Stellungsanzeige (29), wobei die Vorlauftemperatur des Wärmeträgers in einem Heizbetrieb höher und in einem Kühlbetrieb niedriger als die Raumtemperatur ist, und wobei die Stellungsanzeige (29) eine im Heizbetrieb einer Raum-Solltemperatur zwischen einer Mindesttemperatur und einer Höchsttemperatur entsprechende Werteskala (30) aufweist, **dadurch gekennzeichnet, dass** die Stellungsanzeige (28) eine in der Werteskala (30) obere Einstellposition (K) für den Kühlbetrieb umfasst, die oberhalb der Position (5) für die höchste Raum-Solltemperatur im Heizbetrieb angeordnet ist und zugleich eine gegenüber der Höchsttemperatur erhöhte Grenztemperatur definiert.

2. Thermostatventil nach Anspruch 1, **dadurch gekennzeichnet, dass** die obere Einstellposition (K) der Stellungsanzeige einen Endanschlag bildet.

3. Thermostatventil nach Anspruch 1 oder 2, **dadurch gekennzeichnet, dass** die der oberen Einstellposition (K) entsprechende Grenztemperatur um mindestens 3 K, vorzugsweise um mindestens 7 K oberhalb der der Position für die höchste Raum-Solltemperatur liegt.

4. Thermostatventil nach Anspruch 3, **dadurch gekennzeichnet, dass** die der oberen Einstellposition (K) entsprechende Grenztemperatur 32 °C bis 37 °C beträgt.

5. Thermostatventil nach einem der Ansprüche 1 bis 4, **dadurch gekennzeichnet, dass** die Stellungsanzeige (29) des Thermostatventils (26) als Drehstellungsanzeige ausgebildet ist.

6. Thermostatventil nach einem der Ansprüche 1 bis 5, **dadurch gekennzeichnet, dass** die Einstellposition (5) für die Höchsttemperatur im Heizbetrieb eine Rast- oder Anschlagstellung bildet, die beim Verstellen auf die obere Einstellposition (K) für den Kühlbetrieb zu überwinden ist.

7. Raumtemperierungsanlage mit einem im Bereich einer raumbegrenzenden Wärmeübergangsfläche, insbesondere einer Fußboden-, einer Decken- oder einer Wandfläche verlegten Rohrleitungssystem für flüssige Wärmeträger, insbesondere Wasser, mit mindestens einem in einem Rohrzweig des Rohrleitungssystems angeordneten Thermostatventil (26), das einen in einer Steuerpartie des Rohrzweigs angeordneten Ventilsitz sowie einen entgegen der Kraft einer Stellfeder mit einem Dehnstoff beaufschlagten Ventilstößel aufweist, und mit einer auf die Stellfeder unter Verstellung der Raum-Solltemperatur einwirkenden, zwischen einem unteren und einem oberen Begrenzungsanschlag verstellbaren Stellungsanzeige (28), die eine im Heizbetrieb der Raum-Solltemperatur zwischen einer Mindesttemperatur und einer Höchsttemperatur entsprechende Werteskala (30) aufweist, wobei das Rohrleitungssystem beim Heizbetrieb mit dem eine Vorlauftemperatur oberhalb der eingestellten Raumtemperatur aufweisenden Wärmeträger beaufschlagt wird, **dadurch gekennzeichnet, dass** das Rohrleitungssystem bei einem wahlweise einstellbaren Kühlbetrieb mit dem eine Vorlauftemperatur unterhalb einer Raumtemperatur aufweisenden Wärmeträger beaufschlagt wird, und dass die Stellungsanzeige (28) eine in der Werteskala (30) obere Einstellposition (K) für den Kühlbetrieb umfasst, die zugleich eine gegenüber der Höchsttemperatur (28 °C) erhöhte Grenztemperatur (36 °C) des Thermostatventils (26) für den Heiz- und Kühlbetrieb definiert.

8. Raumtemperierungsanlage nach Anspruch 7, **dadurch gekennzeichnet, dass** die obere Einstellposition (K) für den Kühlbetrieb den oberen Begrenzungsanschlag bildet.

9. Raumtemperierungsanlage nach Anspruch 7 oder 8, **dadurch gekennzeichnet, dass** die obere Einstellposition (K) für den Kühlbetrieb in der Werteskala (30) oberhalb der Einstellposition (5) für die Höchsttemperatur (28 °C) im Heizbetrieb angeordnet ist.

10. Raumtemperierungsanlage nach einem der Ansprüche 7 bis 9, **dadurch gekennzeichnet, dass** die der oberen Einstellposition (K) für den Kühlbetrieb entsprechende Grenztemperatur (36 °C) um mindestens 3 K, vorzugsweise um mindestens 7 K oberhalb der der Höchsttemperatur (28 °C) im Heizbetrieb entsprechenden Raum-Solltemperatur liegt.

11. Raumtemperierungsanlage nach Anspruch 10, **dadurch gekennzeichnet, dass** die der oberen Einstellposition (K) entsprechende Grenztemperatur 32 °C bis 37 °C beträgt.

12. Raumtemperierungsanlage nach einem der Ansprüche 7 bis 11, **dadurch gekennzeichnet, dass** die Stellungsanzeige (28) des Thermostatventils als Drehstellungsanzeige ausgebildet ist.

13. Raumtemperierungsanlage nach einem der Ansprüche 7 bis 12, **dadurch gekennzeichnet, dass** die Vorlauftemperatur des Wärmeträgers im Kühlbetrieb 15 °C bis 20 °C beträgt.

14. Raumtemperierungsanlage nach Anspruch 13, **dadurch gekennzeichnet, dass** die Vorlauftemperatur im Kühlbetrieb über einen Regler auf 16 °C bis 19 °C eingestellt wird.

15. Raumtemperierungsanlage nach einem der Ansprüche 7 bis 14, **dadurch gekennzeichnet, dass** der Wärmeträger im Kühlbetrieb durch einen thermisch mit einer Wärmeübertragungsfläche einer Wärmepumpe oder einer Kältemaschine gekoppelten Wärmeaustauscher geleitet wird.

16. Raumtemperierungsanlage nach einem der Ansprüche 7 bis 15, für abgeschlossene, aus mehreren Einzelräumen bestehende Wohneinheiten, mit jeweils mindestens einer in den Fußboden oder die Decke der Einzelräume eingebetteten Rohrgruppe (12', 12", 12"', 12^{IV}), die über je eine Vor- und Rücklaufleitung (14, 16) mit einer Rohrverteilung (18) verbunden und über eines der Thermostatventile (26) einzeln oder gruppenweise nach Maßgabe der Abweichung einer Ist-Temperatur von der eingestellten Raum-Solltemperatur mit dem Wärmeträger beaufschlagbar oder absperrbar sind, **dadurch gekennzeichnet, dass** die Rohrgruppen (12', 12", 12"', 12^{IV}) eines jeden Einzelraums mit ihren vorlauf- und rücklaufseitigen Enden an je eine gemeinsame, nach Art einer Ringleitung innerhalb des Fußbodens oder der Decke durch die Einzelräume hindurchgeführte oder an diesen vorbeigeführte Vor- und Rücklaufleitung (14, 16) in Parallelschaltung angeschlossen sind.

17. Raumtemperierungsanlage nach Anspruch 16, **dadurch gekennzeichnet, dass** die zu den einzelnen Rohrgruppen (12', 12", 12"', 12^{IV}) gehörenden Vorlaufleitungsteile und Rücklaufleitungsteile in der Summe etwa gleich lang sind, wobei die Vorlaufleitungsteile einzeln und in ihrer Gesamtheit wesentlich kürzer als die Rücklaufleitungsteile sind.

18. Raumtemperierungsanlage nach einem der Ansprüche 7 bis 17, **dadurch gekennzeichnet, dass** die Steuerpartie des einer jeden Heizrohrgruppe zugeordneten Rohrzweigs einen außerhalb des Fußbodens oder der Decke angeordneten, das Thermostatventil (26) enthaltenden Leitungsabschnitt (24', 24", 24"', 24^{IV}) aufweist.

19. Raumtemperierungsanlage nach Anspruch 18, **dadurch gekennzeichnet, dass** der Leitungsabschnitt (24', 24", 24"', 24^{IV}) in einer teilweise in den Fußboden oder in die Decke eintauchenden Unterputzdose angeordnet ist.

20. Raumtemperierungsanlage nach Anspruch 19, **dadurch gekennzeichnet, dass** das Thermostatventil (26) im Abstand vom Fußboden oder der Decke über eine freie Außenfläche einer Unterputzdose überstehend angeordnet ist.

## Claims

1. A thermostat valve for radiant panel heaters with a valve seat which is arranged in a pipe part and which is pressurized through the pipe part by a heat transfer medium, with a valve tappet which is pressurized by an expandable substance against the force of a setting spring, and with a setting indicator (29) which is in an operative connection with the setting spring and which is adjustable between an lower and an upper limit stop, wherein the flow temperature of the heat transfer medium in a heating operation is higher than the room temperature, and in a cooling operation it is lower than the room temperature, and wherein the setting indicator (29) has a value scale (30) which corresponds in heating operation to a set room temperature between a minimum temperature and a maximum temperature, **characterized in that** the setting indicator (28) has a top setting position (K) in the value scale (30) for the cooling operation, which is arranged above the position (5) for the highest set room temperature in the heating operation, and which at the same time defines a limit temperature which is increased in comparison with the maximum temperature.

2. The thermostat according to claim 1, **characterized in that** the top setting position (K) of the setting indicator forms an end stop.

3. The thermostat valve according to claim 1 or claim 2, **characterized in that** the limit temperature corresponding to the top setting position (K) is at least 3K, preferably at least 7K above the position for the highest set room temperature.

4. The thermostat valve according to claim 3, **characterized in that** the limit temperature corresponding to the top setting temperature (K) is 32 °C to 37 °C.

5. The thermostat valve according to any one of the claims 1 to 4, **characterized in that** the setting indicator (29) of the thermostat valve (26) is designed as a rotary setting indicator.

6. The thermostat valve according to any one of the claims 1 to 5, **characterized in that** the setting position (5) for the maximum temperature in the heating operation forms a lock position or stop position which has to be overcome when adjusting to the top setting position (K) for the cooling operation.

7. A room temperature tempering installation with a pipe system for liquid heat transfer media, in particular water, laid in the area of a room-limiting heat transfer surface, in particular floor, ceiling or wall surface, with at least one thermostat valve (26) arranged in a branch of the pipe system, which thermostat valve has a valve seat arranged in a pipe branch control part and a valve tappet pressurized by an expandable substance against the force of a setting spring, and with a setting indicator (28) which can be adjusted between a lower and an upper limit stop and acts upon the adjustment spring so as to adjust the set room temperature, and which comprises a value scale (30) corresponding in heating operation to the set room temperature between a minimum temperature and a maximum temperature, wherein a heat transfer medium with a flow temperature above the set room temperature is applied to the pipe system, **characterized in that** a heat transfer medium with a flow temperature below a room temperature can be applied to the pipe system in an optionally adjustable cooling operation, and that the setting indicator (28) comprises a top setting position (K) in the value scale (30) for the cooling operation, which at the same time defines an increased limit temperature (36 °C) of the thermostat valve (26), in comparison with the maximum temperature (28 °C), in heating and cooling operations.

8. The room temperature tempering installation according to claim 7, **characterized in that** the top setting position (K) for the cooling operation forms the upper limit stop.

9. The room temperature tempering installation according to claim 7 or claim 8, **characterized in that** the top setting position (K) for the cooling operation is arranged in the value scale (30) above the setting position (5) for the maximum temperature (28 °C) in the heating operation.

10. The room temperature tempering installation according to any one of the claims 7 to 9, **characterized in that** the limit temperature (36 °c) corresponding to the top setting position (K) for the cooling operation is at least 3K, preferably at least 7K above the set room temperature corresponding to the maximum temperature (28 °C) in the heating operation.

11. The room temperature tempering installation according to claim 10, **characterized in that** the limit temperature corresponding to the top setting position (K) is 32 °C to 37 °C.

12. The room temperature tempering installation according to any one of the claims 7 to 11, **characterized in that** the setting indicator (28) of the thermostat valve is designed as a rotary setting indicator.

13. The room temperature tempering installation according to any one of the claims 7 to 12, **characterized in that** the flow temperature of the heat transfer medium in the cooling operation is 15 °C to 20 °C.

14. The room temperature tempering installation according to claim 13, **characterized in that** the flow temperature in the cooling operation is adjusted by means of a regulator to 16 °C to 19 °C.

15. The room temperature tempering installation according to any one of the claims 7 to 14, **characterized in that** the heat transfer medium in the cooling operation is conducted through a heat exchanger which is thermally coupled with a heat transfer surface of a heat pump or of a refrigerating machine.

16. The room temperature tempering installation according to any one of the claims 7 to 15, for closed residential units consisting of a plurality of individual rooms, each with at least one pipe group (12', 12", 12"', 12^{IV}) which are embedded in the floor or the ceiling of the individual rooms and each of them connected via one flow line and one return line (14, 16) with a pipe distribution (18), and to which the heat transfer medium can be applied or it can be blocked, individually or in groups, by means of one of the thermostat valves (26) according to the deviation of an actual temperature from the set room temperature, **characterized in that** each of the pipe groups (12', 12", 12"', 12^{IV}) of each individual room is connected in parallel with their flow-side and return-side ends to a common flow line and a common return line (14, 16) which, in the manner of a ring line within the floor or the ceiling, are passed through or passed along the individual rooms.

17. The room temperature tempering installation according to claim 16, **characterized in that** the flow line parts and the return line parts associated to the individual pipe groups (12', 12", 12"', 12^{IV}), in total, are approximately of equal length, wherein the flow line parts, individually and as a whole, are considerably shorter than the return line parts.

18. The room temperature tempering installation according to any one of the claims 7 to 17, **characterized in that** the control part of the pipe branch assigned to each of the heating pipe groups has a line section (24', 24", 24"', 24^{IV}) which is arranged outside of the floor or of the ceiling and which includes the thermostat valve (26).

19. The room temperature tempering installation according to claim 18, **characterized in that** the line section (24', 24", 24''', 24^{IV}) is arranged within a flush-mounted socket which penetrates partially into the floor or into the ceiling.

20. The room temperature tempering installation according to claim 19, **characterized in that** the thermostat valve (26) is arranged at a distance from the floor or the ceiling and projects beyond a free outer face of a flush-mounted socket.

## Revendications

1. Valve de thermostat pour des surfaces de chauffage comprenant un siège de valve, disposé dans une partie tubulaire, alimenté par la partie tubulaire avec un agent caloporteur, un poussoir de valve sollicité avec un agent d'extension dans le sens contraire à la force d'un ressort d'ajustage et un affichage de position (29) en liaison active avec le ressort d'ajustage et déplaçable entre une butée de limitation inférieure et une butée de limitation supérieure, la température aller de l'agent caloporteur dans un mode de chauffage et un mode de refroidissement étant respectivement supérieure et inférieure à la température ambiante, et l'affichage de position (29) présentant une échelle graduée de valeurs (30) correspondant dans le mode de chauffage à une température ambiante de consigne entre une température minimale et une température maximale, **caractérisée en ce que** l'affichage de position (28) comporte une position de réglage (K) supérieure dans l'échelle graduée de valeurs (30) pour le mode de refroidissement, qui est disposée au-dessus de la position (5) pour la température ambiante de consigne maximale dans le mode de chauffage et définit en même temps une température limite élevée par rapport à la température maximale.

2. Valve de thermostat selon la revendication 1, **caractérisée en ce que** la position de réglage (K) supérieure de l'affichage de position forme une butée finale.

3. Valve de thermostat selon la revendication 1 ou 2, **caractérisée en ce que** la température limite correspondant à la position de réglage (K) supérieure est supérieure d'au moins 3 K, de préférence d'au moins 7 K à celle de la position pour la température ambiante maximale de consigne.

4. Valve de thermostat selon la revendication 3, **caractérisée en ce que** la température limite correspondant à la position de réglage (K) supérieure va de 32°C à 37°C.

5. Valve de thermostat selon l'une quelconque des revendications 1 à 4, **caractérisée en ce que** l'affichage de position (29) de la valve de thermostat (26) est conçue sous forme d'affichage de position rotative.

6. Valve de thermostat selon l'une quelconque des revendications 1 à 5, **caractérisée en ce que** la position de réglage (5) pour la température maximale dans le mode de chauffage forme une position d'encliquetage ou de butée qui doit être maîtrisée lors du réglage sur la position de réglage (K) supérieure pour le mode de refroidissement.

7. Installation de climatisation comprenant un système de tuyauterie posé dans la zone d'une surface d'échange de chaleur délimitant un espace, en particulier une surface de plancher, une surface de plafond ou une surface de paroi, pour des agents caloporteurs liquides, en particulier de l'eau, avec au moins une valve de thermostat (26) disposée dans une branche de tuyau du système de tuyauterie, qui présente un siège de valve disposé dans une partie de commande de la branche de tuyau et un poussoir de valve alimentée dans le sens contraire à la force d'un ressort d'ajustage avec un agent d'extension, et un affichage de position (28) agissant sur le ressort d'ajustage avec le réglage de la température ambiante de consigne, déplaçable entre une butée de limitation inférieure et une butée de limitation supérieure, qui présente une échelle graduée (30) correspondant dans le mode de chauffage à la température ambiante de consigne entre une température minimale et une température maximale, le système de tuyauterie étant alimenté lors du mode de chauffage avec l'agent caloporteur présentant une température aller supérieure à la température amiante réglée, **caractérisée en ce que** le système de tuyauterie est alimenté lors d'un mode de refroidissement réglable en option avec l'agent caloporteur présentant une température aller au-dessous d'une température ambiante, et **en ce que** l'affichage de position (28) comprend une position de réglage (K) supérieure dans l'échelle graduée de valeurs (30) pour le mode de refroidissement, qui définit en même temps une température limite (36°C), élevée par rapport à la température maximale (28°C), de la valve de thermostat (26) pour le mode de chauffage et le mode de refroidissement.

8. Installation de climatisation selon la revendication 7, **caractérisée en ce que** la position de réglage (K) supérieure pour le mode refroidissement forme la butée de limitation supérieure.

9. Installation de climatisation selon la revendication 7 ou 8, **caractérisée en ce que** la position de réglage (K) supérieure pour le mode refroidissement est disposée dans l'échelle graduée de valeurs (30) au-dessus de la position de réglage (5) pour la température maximale (28°C) dans le mode de chauffage.

10. Installation de climatisation selon l'une quelconque des revendications 7 à 9, **caractérisée en ce que** la température limite (36°C) correspondant à la position de réglage (K) supérieure pour le mode de refroidissement est supérieure d'au moins 3 K, de préférence d'au moins 7 K à la température ambiante de consigne correspondant à la température maximale (28°C) dans le mode de chauffage.

11. Installation de climatisation selon la revendication 10, **caractérisée en ce que** la température limite correspondant à la position de réglage (K) supérieure va de 32°C à 37°C.

12. Installation de climatisation selon l'une quelconque des revendications 7 à 11, **caractérisée en ce que** l'affichage de position (28) de la valve de thermostat est conçue comme affichage de position rotative.

13. Installation de climatisation selon l'une quelconque des revendications 7 à 12, **caractérisée en ce que** la température aller de l'agent caloporteur dans le mode de refroidissement va de 15°C à 20°C.

14. Installation de climatisation selon la revendications 13, **caractérisée en ce que** la température aller dans le mode de refroidissement est réglée au moyen d'un régulateur sur 16°C jusqu'à 19°C.

15. Installation de climatisation selon l'une quelconque des revendications 7 à 14, **caractérisée en ce que** l'agent caloporteur dans le mode de refroidissement est acheminé par un échangeur de chaleur couplé thermiquement avec une surface de transmission de chaleur d'une pompe à chaleur ou d'une machine frigorifique.

16. Installation de climatisation selon l'une quelconque des revendications 7 à 15, pour des unités d'habitation fermées, constituées de plusieurs locaux individuels, comprenant chacune au moins un groupe de tuyaux (12', 12", 12"', 12^{IV}) intégré dans le plancher ou le plafond des locaux individuels, qui sont reliés chacun par une conduite aller et une conduite retour (14, 16) à une répartition de tuyau (18) et peuvent être alimentés ou fermés avec l'agent caloporteur au moyen de l'une des valves de thermostat (26) individuellement ou par groupe en fonction de l'écart entre une température réelle et la température ambiante réglée de consigne, **caractérisée en ce que** les groupes de tuyaux (12', 12", 12"', 12^{IV}) de chaque local individuel sont raccordés par chacune de leurs extrémités côté aller et retour à une conduite aller et une conduite retour (14, 16) communes, passées à la façon d'une conduite circulaire à l'intérieur du plancher ou du plancher à travers les locaux individuels ou guidées en passant devant ces locaux, et ce dans un branchement en parallèle.

17. Installation de climatisation selon la revendications 16, **caractérisée en ce que** les parties de conduite aller et de conduite retour appartenant aux groupes de tuyaux (12', 12", 12"', 12^{IV}) individuels ont au total à peu près la même longueur, les parties de conduite aller étant individuellement et dans leur totalité nettement plus courtes que les parties de conduite retour.

18. Installation de climatisation selon l'une quelconque des revendications 7 à 17, **caractérisée en ce que** la partie de commande de la branche de tuyau attribuée à chaque groupe de tuyaux de chauffage présente une partie de conduite (24', 24'', 24''', 24^{IV}) disposée à l'extérieur du plancher ou du plafond et contenant la valve de thermostat (26).

19. Installation de climatisation selon la revendication 18, **caractérisée en ce que** la partie de conduite (24', 24", 24"', 24^{IV}) est disposée dans une boîte de branchement encastrée plongeant en partie dans le plancher ou dans le plafond.

20. Installation de climatisation selon la revendication 19, **caractérisée en ce que** la valve de thermostat (26) est disposée à distance du plancher ou du plafond en dépassant d'une surface extérieure libre d'une boîte de branchement encastrée.
